# DEMANDE DE BREVET EUROPEEN

(11) **EP 1 139 219 A1**
(43) Date de publication de la demande: **04.10.2001**
(21) Numéro de dépôt: 01400604.3
(22) Date de dépôt: 08.03.2001
(51) Int. Cl.: G06F 9/46, H04L 29/06, H04Q 3/00

(54) **Controle d'acces aux services de télécommunication**

(30) Priorité: 30.03.2000 FR 0004019
(71) Demandeur: ALCATEL, 75008 Paris (FR)
(72) Inventeur: Couturier, Alban, 92320 Chatillon (FR)
(74) Mandataire: Sciaux, Edmond

(57) **Abrégé**

Système pour la gestion d'appels (C) de services, comportant des modules de contrôles d'accès (A_{1,} A₂, A₃... Aₙ) mettant en oeuvre des mécanismes de contrôle d'accès aux services, caractérisé en ce qu'il comporte en outre des modules maîtres, chacun étant associé à un service, à un ensemble (E) de modules de contrôle d'accès et à un ensemble (E_{R}) de modules de traitement d'appel (R₁, R₂, R₃... Rₚ), et comportant :
- des moyens pour recevoir les appels,
- des moyens pour transmettre des informations (I) relatives à chacun des appels à l'ensemble de modules de contrôle d'accès,
- des moyens pour décider de l'acceptation des appels en fonction de données (D) reçues de l'ensemble de modules de contrôle d'accès.
- des moyens pour transmettre des secondes informations (I_{R}) relatives à chacun des appels, à l'ensemble de modules de traitement d'appel, si l'appel a été accepté.

## Description

La présente invention concerne un système pour la gestion d'appels de services, notamment de services de télécommunication. Ces services de télécommunication peuvent par exemple être l'établissement d'une communication avec un abonné soit par un réseau classique de télécommunication, soit par Internet (VolP pour *Voice over IP*, en anglais), ou bien l'établissement d'une téléconférence ou vidéoconférence, d'un réseau privé (VPN pour *Virtual Private Network,* en anglais), d'un appel avec tarification spéciale (numéro 800 par exemple), etc.

L'invention trouve, par exemple, une application dans les architectures de type réseau intelligent. Dans ce genre d'architecture, ou dans toute autre architecture de télécommunication évoluée, il est connu de mettre en oeuvre des mécanismes de contrôle d'accès aux services, tels des filtres basés sur l'identificateur de l'appelant, sur la zone géographique de l'appelant, ou sur l'horaire de l'appel. On peut aussi mettre en oeuvre des renvois d'appels, qui peuvent être soit inconditionnels, soit conditionnés par l'identificateur de l'appelant, sa zone géographique, l'horaire de son appel etc. Bien évidemment, la liste des contrôles d'accès possibles ne peut pas être donnée de façon exhaustive.

Chaque service peut utiliser un de ces contrôles d'accès ou bien plusieurs de ceux-ci. Une description de chaque service, en ce qui concerne les contrôles d'accès qu'il désire utiliser, est donc nécessaire.

Plus particulièrement, dans le cadre de la simple téléphonie, il convient d'effectuer une description de chaque abonné au réseau de télécommunication, pour ce qui est des contrôles d'accès qu'il souhaite mettre en oeuvre.

Or le besoin existe de pouvoir ajouter de nouveaux contrôles d'accès, et modifier ceux existants notamment pour les améliorer.

Par exemple, un abonné peut, à un moment donné, décider d'ajouter un mécanisme de filtrage sur l'identificateur de l'appelant à cause d'appels nuisibles et répétitifs provenant d'un appelant particulier.

Actuellement, ces contrôles d'accès sont généralement codés au sein d'un système de gestion des appels de services sous une forme statique. Plus précisément, le fournisseur du système livre une plate-forme complète et non évolutive. Ainsi, l'implantation d'un nouveau contrôle d'accès, s'il n'était pas prévu au départ, engendre un fort coût puisqu'il oblige à re-développer une partie du système.

Par ailleurs, les fournisseurs de modules logiciels mettant en oeuvre ces contrôles d'accès et les fournisseurs de l'architecture devant mettre en oeuvre ces modules, ne sont pas nécessairement les mêmes, de sorte qu'un surcoût important d'interopérabilité est engendré.

Une deuxième solution de l'état de la technique consiste à décrire le comportement du système pour chaque abonné (ou plus généralement, pour chaque service) en un langage de description, comme, par exemple, le langage CPL (pour *Call Processing Language*). Dans la description de chaque abonné, on peut faire appel à chacun des contrôles d'accès existants, et ajouter un nouveau contrôle d'accès consiste à modifier la description des abonnés concernés pour faire appel à ce nouveau contrôle d'accès.

Toutefois, cette solution n'est pas non plus satisfaisante, car, par nature, un langage de description est limité en possibilités et ne permet pas de prendre en compte les services les plus avancés.

Par exemple, un langage comme CPL ne permet pas de faire appel directement à une base de données, ni d'appeler des modules logiciels développés dans un autre langage, c'est-à-dire des composants logiciels pouvant s'exécuter de façon autonome (par exemple, du code compilé ou interprété par une machine virtuelle Java...).

Le but de l'invention est donc de résoudre ces problèmes en proposant un système performant et évolutif. Elle a pour objet un système pour la gestion d'appels de services comportant des modules de contrôles d'accès mettant en oeuvre des mécanismes de contrôle d'accès aux services, qui se distingue en ce qu'il comporte en outre des modules maîtres. Chacun de ces modules maîtres est associé à un service, à un ensemble de modules de contrôle d'accès et à un ensemble de modules de traitement d'appel, et comporte :
- des moyens pour recevoir les appels de service,
- des moyens pour transmettre des informations relatives à chacun des appels à l'ensemble de modules de contrôle d'accès,
- des moyens pour décider de l'acceptation des appels en fonction de données reçues de l'ensemble de modules de contrôle d'accès,
- des moyens pour transmettre des secondes informations relatives à chacun de ces appels, à l'ensemble de modules de traitement d'appel, si ledit appel a été accepté.

Le système selon l'invention est aussi susceptible de s'appliquer à toute architecture, en dehors du monde des télécommunications où il est possible de distinguer l'accès au service, du traitement proprement dit.

Il peut par exemple s'agir de la gestion de tout système complexe (chaîne de production, centrale nucléaire...). Dans le domaine des télécommunications, l'invention peut aussi s'appliquer aux réseaux de gestion des télécommunications (TMN pour *Telecommunication Management* Network, en anglais) ainsi que définis par les normes M.3000 et suivantes de l'ITU-T (*International Telecommunication Union, Telecommunication part*).

L'invention a aussi pour objet un procédé pour la gestion d'appels à des services qui se caractérise en ce qu'il comporte les étapes ordonnées suivantes :
- réception d'un appel par un module maître,
- transmission par ledit module maître, d'informations relatives à l'appel à un ensemble de modules de contrôle d'accès,
- établissement de décisions par les modules de contrôle d'accès, à partir des informations relatives à l'appel,
- transmission d'au moins une de ces décisions, depuis l'ensemble de modules de contrôle d'accès, vers le module maître,
- établissement d'une décision finale par le module maître, en fonction de cette au moins une décision,
- transmission de secondes informations relatives à l'appel vers un ensemble de modules de traitement d'appels, lorsque l'appel à été accepté.

Enfin, l'invention a pour autre objet un procédé d'ajout dynamique d'un nouveau module de contrôle d'accès et/ou d'un nouveau module de traitement d'appel, dans un système de gestion d'appel de service, consistant à émettre un message vers le module maître contenant un identificateur du nouveau module de contrôle d'accès et/ou du nouveau module de traitement d'appel à ajouter.

L'invention et ses avantages apparaîtront de façon plus claire dans la description qui va suivre en liaison avec les figures jointes.

La figure 1 illustre le système selon l'invention, de façon générale et schématique.

La figure 2 représente un premier mode de réalisation de l'invention.

La figure 3 représente un second mode de réalisation de l'invention.

La figure 4 schématise une mise en oeuvre de l'invention, comportant des modules de traitements d'appel.

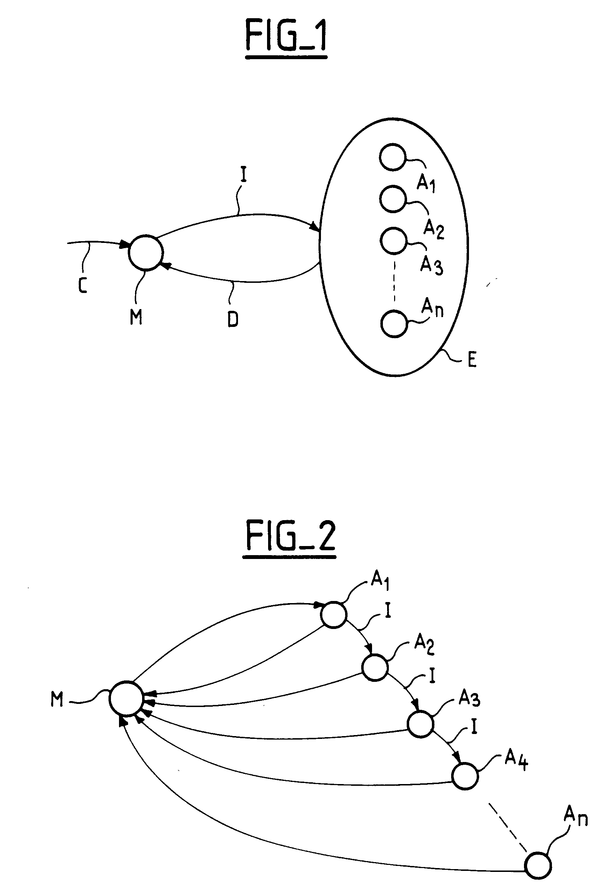

La figure 1 illustre schématiquement la structure générale du système selon une mise en oeuvre de l'invention.

Sur cette figure, un module maître M reçoit des appels C de services depuis un réseau T. À la réception de chaque appel C, il transmet des informations I relatives à cet appel à un ensemble E de modules de contrôle d'accès A₁, A₂... Aₙ. Ces modules de contrôles d'accès sont des entités, par exemple logicielles, mettant en oeuvre chacune un mécanisme de contrôle d'accès comme évoqué précédent, c'est-à-dire typiquement un renvoi d'appel ou un filtrage etc.

Le module maître possède en outre des moyens pour décider de l'acceptation de l'appel en fonction de données D reçues des modules de contrôle d'accès.

Selon une mise en oeuvre de l'invention, les données D représentent une ou des décisions partielles pouvant prendre une valeur parmi les possibilités suivantes :
- Acceptation de l'appel,
- Rejet de l'appel,
- Non-décision.

### Décisions partielles prises par les modules de contrôle d'accès

Selon une mise en oeuvre préférentielle de l'invention, chaque module de contrôle d'accès est à même de prendre une décision partielle concernant chaque appel reçu. Cette décision partielle peut être prise de façon indépendante des autres décisions partielles prises par les autres modules de contrôle d'accès. Cette façon de faire permet de les rendre indépendant les uns des autres afin de rendre le système modulaire.

Une décision partielle d'acceptation est émise par un module de contrôle d'accès lorsque l'appel doit être accepté, indépendamment de la décision des autres modules de contrôle d'accès. Par exemple, dans une application de l'invention au domaine des télécommunications, un abonné peut vouloir qu'un correspondant particulier (par exemple son conjoint) puisse le joindre à tout moment. Un tel appel doit donc être accepté.

En ce cas, le module de contrôle d'accès correspondant à un mécanisme de type « liste prioritaire » émet une décision de type « Acceptation de l'appel » qui signifie qu'il n'est pas nécessaire d'interroger les autres modules de contrôle d'accès pour établir une décision finale d'acceptation.

Une décision de type « rejet de l'appel» est émise par un module de contrôle d'accès lorsqu'un appel doit être rejeté indépendamment de la décision des autres modules de contrôle d'accès. Par exemple, si un appel provenant d'une zone géographique qui fait l'objet d'un filtrage survient, le module de contrôle d'accès mettant en oeuvre le filtrage sur zone géographique émet une décision de type « rejet de l'appel ».

Dans tous les autres cas, les modules de contrôle d'accès émettent des décisions de type « non-décision » qui signifient qu'ils ne sont pas à même ni d'accepter l'appel de façon inconditionnelle, ni de le rejeter.

C'est par exemple le cas d'un module de contrôle d'accès mettant un oeuvre un filtrage sur la zone géographique de l'appelant, et que celui-ci n'appartient pas à une zone proscrite. Il ne peut alors pas le rejeter, ni l'accepter car le fait que l'appel ne soit pas exclu par son filtre ne signifie pas qu'il ne soit pas exclu par d'autres filtres mis en oeuvre par d'autres modules de contrôle d'accès.

Plusieurs mises en oeuvre sont possibles pour organiser les modules de contrôle d'accès et les faire coopérer afin d'arriver à un consensus.

### Organisation en chaîne

La figure 2 illustre une première façon d'organiser l'ordonnancement des communications entre un module maître M et l'ensemble des modules de contrôle d'accès A₁, A₂, A₃... Aₙ, qui lui sont associés.

Selon cette mise en oeuvre, les modules de contrôle d'accès sont organisés en chaîne.

Dans un premier temps, le module maître transmet les informations I relatives à l'appel au premier module de contrôle d'accès de la chaîne, A₁. Si ce premier module de contrôle d'accès prend une décision D₁ de type « Acceptation de l'appel » ou « Rejet de l'appel », il la transmet au module maître. Dans le cas contraire (« non-décision »), il transmet les informations relatives à l'appel au second module de contrôle d'accès de la chaîne, et ainsi de suite.

Le dernier module de contrôle d'accès transmet sa décision Dₙ, quelle qu'elle soit, au module maître. Ce module maître possède des moyens pour prendre une décision finale en fonction de la décision qu'il a reçue d'un des modules de contrôle d'accès. Il est en effet à noter que dans cette mise en oeuvre particulière, il ne peut recevoir qu'une seule décision.

Dans le cas où la décision reçue est de type « Acceptation de l'appel » ou « Rejet de l'appel », la décision finale est identique à la décision reçue. Dans le cas où la décision est de type « non-décision », alors la décision finale est une acceptation de l'appel.

### Organisation en étoile

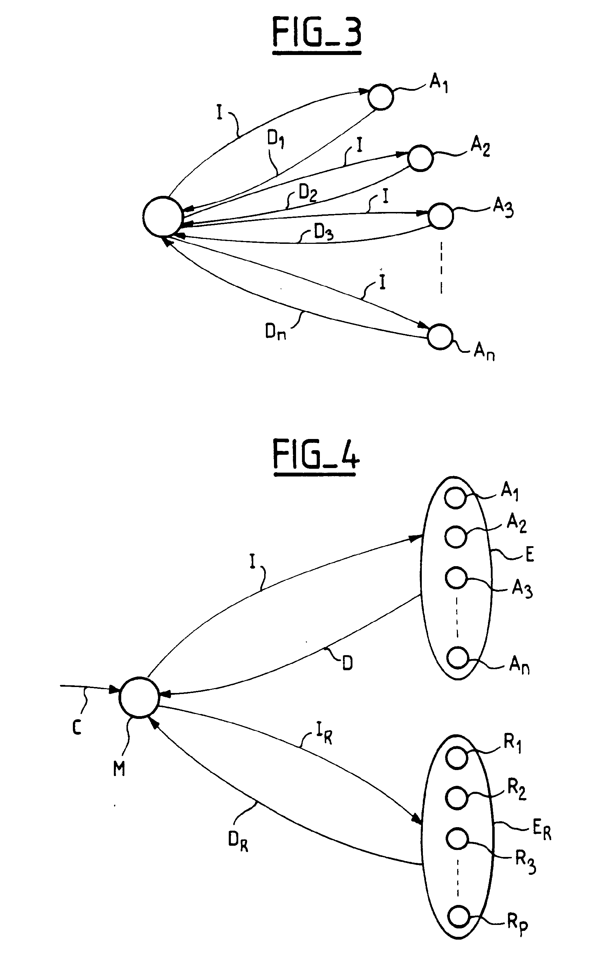

La figure 3 illustre une autre façon d'ordonnancer les communications entre un module maître M et l'ensemble des modules de contrôle d'accès A₁, A₂, A₃... Aₙ qui lui sont associés.

Selon cette mise en oeuvre, les modules de contrôle d'accès sont organisés en étoile, c'est-à-dire qu'ils transmettent leur décision D₁, D₂, D₃... Dₙ, quelle qu'elle soit, au module maître.

Une première possibilité pour implémenter cette mise en oeuvre consiste à transmettre les informations relatives à l'appel parallèlement à tous les modules de contrôle d'accès. Ceux-ci traitent l'appel de façon concurrente puis transmettent leur décision au module maître.

Une seconde possibilité consiste à transmettre les informations relatives à l'appel à un premier module de contrôle d'accès, A₁, d'attendre sa décision pour, éventuellement, transmettre ces informations à un deuxième module de contrôle d'accès, A₂, et ainsi de suite.

Cette seconde mise en oeuvre minimise les échanges entre le module maître et les modules de contrôle d'accès, mais requiert, sauf cas exceptionnellement favorable, davantage de temps de traitement.

### Gestion des conflits

II est possible que certains modules de contrôle d'accès soient amenés à prendre des décisions contradictoires. Par exemple, si un mécanisme d'appel prioritaire et un mécanisme de rejet sur créneau horaire sont mis en place, un même appel peut faire l'objet d'une décision de type « Acceptation de l'appel » et d'une décision de type « Rejet de l'appel ».

Ce conflit apparent peut être résolu au moyen de priorité, c'est-à-dire en décidant d'un ordre d'importance des décisions prises par les différents modules de contrôle d'accès.

Dans le cas d'une mise en oeuvre sous forme de chaîne, le rang du module de contrôle d'accès (c'est-à-dire, sa position dans la chaîne) correspond directement à sa priorité.

Il en est de même dans le cas d'une mise en oeuvre dans laquelle les modules de contrôle d'accès sont organisés en étoile, si le module maître transmet les informations relatives à l'appel de façon séquentielle, c'est-à-dire à la suite de la réception d'une décision, comme décrit précédemment.

Dans ses deux situations, les modules de contrôle d'accès ayant une forte priorité sont à même de prendre des décisions avant que les modules de contrôle d'accès de priorité moindre aient pu être interrogé. Les conflits sont ainsi évités.

Dans le cas d'une mise en oeuvre de type "étoile" dans laquelle les informations relatives à l'appel sont transmises de façon parallèle, le module maître est en mesure de recevoir deux décisions a priori contradictoires. Il convient donc d'associer une priorité, par exemple sous la forme d'un nombre, à chaque module de contrôle d'accès, ces priorités pouvant être stockées dans une table contenue par le module maître.

De façon alternative, il est également possible de mettre en oeuvre un système de vote, c'est-à-dire que le module maître compte les nombres de décisions de type « Acceptation d'appel » et les décisions de type « Rejet de l'appel » et prends sa décision finale en fonction de ces nombres.

### Implémentation et ajout dynamique de nouveaux modules

Selon une mise en oeuvre de l'invention, les différents modules (maîtres et de contrôle d'accès) peuvent être implémentés conformément aux spécifications CORBA (*Common Object Request Broker Architecture*) de l'OMG (*Open Management Group).* Dans ce cas, les communications entre les différents modules (décisions, informations relatives aux appels...) sont effectuées par l'intermédiaire d'un bus logiciel (appelé ORB, pour *Object Request Broker*) auquel les modules sont connectés.

Une propriété de CORBA est de pouvoir connecter de façon dynamique des nouveaux éléments logiciels au bus logiciel et de le faire connaître aux éléments logiciels précédemment connectés. Ainsi, il devient possible d'ajouter dynamiquement des nouveaux modules de contrôle d'accès sans qu'il soit nécessaire de recompiler le système, ni même de le stopper. Une telle mise en oeuvre de l'invention, quoi que grandement facilité par l'apport de CORBA ou d'autres environnements de même type (tel DCOM de la société Microsoft), est susceptible d'être réalisée quelque soit l'environnement technique sous-jacent.

D'une façon générale, il suffit que le module maître dispose de moyens pour recevoir des demandes d'ajout de nouveaux modules de contrôle d'accès, et les inclure dans l'ensemble des modules de contrôle d'accès auquel il est associé.

Les priorités que l'on affecte aux modules de contrôles d'accès, pour un service de téléphonie, peuvent être divisées en plusieurs groupes :
- Un groupe « société »
- Un groupe « abonné »

Ainsi, un abonné peut ajouter de nouveaux modules de contrôles d'accès (par exemple un renvoi d'appel, ou une liste prioritaire) mais ceux-ci se verront systématiquement affectés par le système une priorité plus faible que ceux appartenant au groupe « société ». Ces derniers mettent en oeuvre des recommandations globales pour l'ensemble d'un site ou d'une société.

### Modules de traitement d'appels

Selon une mise en oeuvre de l'invention, le système dispose de surcroît d'un ensemble de modules de traitement d'appels, qui ont pour charge de réaliser correctement l'accès au service demandé.

Dans le cadre d'une application de l'invention au domaine des télécommunications, ces modules de traitement d'appel peuvent, à titre d'exemples :
- mettre en oeuvre des algorithmes de routage d'appel au travers d'un réseau jusqu'au service ou abonné demandé, de taxation de ces appels, etc.
- paramétrer l'appel en fonction de préférences tels que les codeur-décodeurs utilisés, la qualité de service, l'adresse finale de l'appel (numéro de téléphone, adresse IP *(Internet Protocol*), numéro de port, de circuit virtuel en technologie ATM (*Asynchronous Transfer Protocol),* nom du protocole (SIP, H.323...), les différents types de communication (vidéo, audio, voix...), etc.
- offrir des services tels que jouer une annonce, joindre un tiers à la communication etc.
- gérer l'appel après son établissement, pour changer les paramètres précités en cours d'appel.

Selon cette mise en oeuvre, une fois qu'un appel a été accepté, le module maître peut transmettre des informations relatives à cet appel à un ensemble de modules de traitement d'appel afin qu'il soit correctement acheminé dans le réseau, facturé, etc.

Cette mise en oeuvre est illustrée par la figure 4.

À la réception d'un appel, le module maître transmet des informations I relatives à cet appel vers l'ensemble E des modules de contrôle d'accès, A₁, A₂, A₃... Aₙ. Il reçoit ensuite une ou plusieurs décision de la part de cet ensemble E_{A} et décide alors de l'acceptation ou du rejet de l'appel concerné ainsi que précédemment expliqué.

Ensuite, le module maître peut transmettre des informations I_{R} relatives à cet appel vers l'ensemble E_{R} des modules de traitement d'appel, R₁, R₂, R₃...Rₚ. Ces informations I_{R} peuvent être identiques ou différentes des informations I transmises aux modules de contrôle d'accès.

Il peut alors recevoir une ou plusieurs décisions D_{R} de la part de cet ensemble et peut éventuellement prendre une décision finale à partir de ces décisions. Ces décisions peuvent concerner l'acheminement (ou routage), la taxation, etc.

Tout comme les modules de contrôle d'accès, les modules de traitement d'appels peuvent être dynamiquement ajoutés, notamment en tirant profit des principes de CORBA. Le module maître peut donc disposer de moyens pour recevoir des demandes d'ajout de nouveaux modules de traitement d'appel, et les inclure dans l'ensemble de modules de traitement d'appel auquel il est associé.

### Détermination du module de traitement d'appel

Selon une mise en oeuvre de l'invention, les modules de contrôle d'accès émettent, en même temps qu'une décision de type « acceptation de l'appel", un identifiant du module de traitement d'appel qu'il décide devoir traiter l'appel. En effet, la connaissance des spécialisations des différents modules de traitements d'appel peut être déportée sur les modules de contrôle, afin d'accroître la modularité du système.

Toutefois, une autre mise en oeuvre possible consiste en ce que le module maître ait une connaissance a priori des associations entre les modules de contrôle d'accès et les modules de traitement d'appels, c'est-à-dire sans qu'il soit nécessaire que les premiers transmettent l'identifiant d'un de ces derniers.

En reprenant l'exemple d'un système de télécommunication, à chaque module de contrôle d'accès est associé un (ou plusieurs) module de traitement d'appel. Pour simplifier, on suppose que ces modules de traitement d'appel ne sont en charge que du routage des appels.

Lorsqu'un module de contrôle d'accès prend une décision de type « Acceptation de l'appel », il transmet au module maître, d'une part ladite décision, et d'autre part un identifiant d'un module de traitement d'appel. Le module maître est alors à même de dialoguer avec ce dernier, afin de déterminer le numéro d'appel de l'appelé.

Par exemple, si un module de contrôle d'accès gère un filtre de renvoi d'appel, alors il peut transmettre une décision de type « Acceptation de l'appel » en indiquant quel est le module de traitement d'appel qui est à même d'effectuer le renvoi d'appel en attribuant le bon routage dans le réseau.

## Revendications

1. Système pour la gestion d'appels (C) de services, comportant des modules de contrôles d'accès (A₁, A₂, A₃... Aₙ) mettant en oeuvre des mécanismes de contrôle d'accès aux services, **caractérisé en ce qu'**il comporte en outre des modules maîtres, chacun étant associé à un service et d'une part à un ensemble (E) de modules de contrôle d'accès et d'autre part à un ensemble (E_{R}) de modules de traitement d'appel (R₁, R₂, R₃... Rₚ), et comportant :
• des moyens pour recevoir lesdits appels,
• des moyens pour transmettre des informations (I) relatives à chacun desdits appels audit ensemble de modules de contrôle d'accès,
• des moyens pour décider de l'acceptation desdits appels en fonction de données (D) reçues dudit ensemble de modules de contrôle d'accès.
• des moyens pour transmettre des secondes informations (I_{R}) relatives à chacun desdits appels, audit ensemble de modules de traitement d'appel, si ledit appel a été accepté.

2. Système selon l'une des revendications précédentes, dans lequel lesdits modules de contrôle d'accès possèdent des moyens pour émettre des décisions (D_{R}) du type « acceptation de l'appel », « rejet de l'appel » et « non-décision ».

3. Système selon la revendication précédente, **caractérisé en ce que** lesdits moyens pour émettre des décisions sont prévus de sorte que les décisions (D_{R}) des types « acceptation de l'appel » et « rejet de l'appel » sont émises à destination dudit module maître.

4. Système selon la revendication précédente, **caractérisé en ce que** lesdits moyens pour émettre des décisions sont prévus de sorte que les décisions de type « non-décision » sont émises à destination dudit module maître.

5. Système selon la revendication 3, dans lequel lesdits modules de contrôle d'accès sont organisés en chaîne, lesdits moyens pour émettre des décisions du dernier module de contrôle d'appel de ladite chaîne étant prévus pour émettre les décisions à destination dudit module maître, et les autre modules de contrôle d'accès possédant des moyens pour transmettre lesdites informations relatives à l'appel vers les modules de contrôles d'accès suivants.

6. Système selon l'une des revendications précédentes, dans lequel chaque module maître possède en outre des moyens pour recevoir des demandes d'ajout de nouveaux modules de contrôle d'accès et pour les inclure dans l'ensemble des modules de contrôle d'accès auquel il est associé.

7. Système selon l'une des revendications précédentes, dans lequel chaque module maître possède en outre des moyens pour recevoir des demandes d'ajout de nouveaux modules de traitement d'appel et pour les inclure dans l'ensemble des modules de traitement d'appel auquel il est associé.

8. Procédé pour la gestion automatique d'appels à des services par un système de traitement de l'information, **caractérisé en ce qu'**il comporte les étapes ordonnées suivantes :
• réception d'un appel par un module maître,
• transmission par ledit module maître, d'informations relatives audit appel à un ensemble de modules de contrôle d'accès,
• établissement de décisions par lesdits modules de contrôle d'accès, à partir desdites informations relatives audit appel,
• transmission d'au moins une desdites décisions, à partir dudit ensemble de modules de contrôle d'accès, vers ledit module maître,
• établissement d'une décision finale par ledit module maître, en fonction de ladite au moins une décisions.
• transmission de secondes informations relatives à l'appel vers un ensemble de modules de traitement d'appels, lorsque ledit appel à été accepté.

9. Procédé d'ajout dynamique d'un nouveau module de contrôle d'accès et/ou d'un nouveau module de traitement d'appel, dans un système de gestion d'appel de service, consistant à émettre un message vers ledit module maître contenant un identificateur dudit nouveau module de contrôle d'accès et/ou dudit nouveau module de traitement d'appel.
